**Europäisches Patentamt**

**European Patent Office**

**Office européen des brevets**

(19)

(11) Publication number : **0 378 556 B1**

(12)

# EUROPEAN PATENT SPECIFICATION

(45) Date of publication of patent specification :
**15.01.92 Bulletin 92/03**

(51) Int. Cl.⁵ : **C08F 4/68,** C08F 10/02,
// C08F4/02

(21) Application number : **88907418.3**

(22) Date of filing : **15.08.88**

(86) International application number :
**PCT/SE88/00414**

(87) International publication number :
**WO 89/01497 23.02.89 Gazette 89/05**

(54) **CATALYST COMPOSITION.**

(30) Priority : **19.08.87 SE 8703212**

(43) Date of publication of application :
**25.07.90 Bulletin 90/30**

(45) Publication of the grant of the patent :
**15.01.92 Bulletin 92/03**

(84) Designated Contracting States :
**AT BE CH DE FR GB IT LI LU NL SE**

(56) References cited :
**EP-A- 0 022 658**
**EP-A- 0 110 608**
**EP-A- 0 187 495**
**EP-A- 0 188 099**
**US-A- 4 435 520**

(73) Proprietor : **NESTE OY**
**Keilaniemi**
**SF-02150 Espoo 15 (FI)**

(72) Inventor : **PALMQVIST, Ulf**
**Västra Söbacken 70**
**S-444 00 Stenungsund (SE)**
Inventor : **JOHANSSON, Solveig**
**Haglingevägen 1**
**S-444 00 Stenungsund (SE)**
Inventor : **LINDGREN, Daniel**
**Sörkroken 16**
**S-440 74 Hjälteby (SE)**
Inventor : **WAHLSTRÖM, Anders**
**Strandvägen 44**
**S-444 00 Stenungsund (SE)**

(74) Representative : **Wiklund, Erik et al**
**AWAPATENT AB Box 5117**
**S-200 71 Malmö (SE)**

EP 0 378 556 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a catalyst composition, more particularly to a catalyst composition which is intended for the polymerisation of olefin monomers, especially ethylene. The invention also comprises a process for producing an olefin polymer, such as polyethylene, using the said castalyst composition.

It is known to polymerise olefins, especially ethylene, under moderate conditions in respect of temperature and pressure, and a large number of inventions and patents are to be found in this field. The low-pressure polymerisation of olefins was made possible by the so-called Ziegler or Ziegler-Natta catalysts, and the Phillips catalysts, and a large number of different catalysts of these types have been developed over the years. A general characteristic feature of Ziegler catalysts based on Ti is that they give a polymer having a relatively narrow molecular weight distribution, which is an advantage in many applications, but disadvantageous in others, for example when it is desired to produce ethylene polymers for blow moulding and the production of film. In these contexts, a medium or wide molecular weight distribution is desired. Furthermore, titanium-based Ziegler catalysts generally have a satisfactory hydrogen response, which is positive since it allows of a satisfactory control of the molecular weight of the polymer by the addition of hydrogen to the reactor. On the other hand, Ziegler catalyst based on titanium generally have a relatively poor comonomer response, which is a disadvantage. Butene, hexene and 4-methyl-1-pentene are used as comonomers in the polymerisation to act as a density controlling agent for the polymer by creating branches in the polymer chain. Finally, Ziegler catalysts do not generally bring about a terminal group unsaturation in the finished polymer, which is an advantage because such unsaturation may give rise to an obnoxious smell and taste as well as crosslinking during high-temperature working.

For the production of olefin polymers having a wide molecular weight distribution, so-called chromium oxide catalysts have been developed, which however have a poor hydrogen response and give rise to terminal group unsaturation in the finished polymer.

Furthermore, olefin polymerisation catalysts have been developed which are based on vanadium for the production of polymers having a wider molecular weight distribution than is normally the case in Ziegler catalysts based on Ti. One example of this prior art technique is British patent specification 1,489,410 which describes a catalyst composition that is produced by treating a support of dried silica with an organoaluminium compound and then reacting the treated support material with a vanadium compound in which the vanadium has a valence of at least +3, or with a combination of a vanadium compound, an aluminium hydrocarbyloxide and trialkyl aluminium. The preferred vanadium compound is vanadium oxytrichloride.

Another example of the prior art technique concerning vanadium-based catalysts is U.S. patent specification 4,435,520 (corresponding to European patent specification 0,110,605) which describes the production of a vanadium-based catalyst incorporating a "tunable" variable by means of which polymers having a medium, substantially linearly variable molecular weight distribution can be produced. The catalyst composition incorporates a support which is an inorganic oxide, preferably silica, and the support is reacted with an organometallic compound, preferably a trialkyl aluminium compound, such as triethyl aluminium, whereupon the support material thus treated is caused to react with a vanadium compound consisting of a mixture of 10-90 mol% of $VOCl_3$ and about 90-10 mol% of $VCl_4$. The highest content of $VOCl_3$ is used when the widest molecular weight distribution is required.

Still another example of vanadium-based catalysts is described in European patent specification 0,120,501.

The catalyst is a vanadium trihalide/electron donor complex and an aluminium alkyl or borohalide combined with an aluminium alkyl as cocatalyst and an alkyl halide as promoter. The disadvantage of this catalyst is the large proportion of fines, and furthermore the catalyst gives a narrower molecular weight distribution than the catalyst of the present invention, especially at low densities.

A further example of prior art technique is EP-Al-0,187,495 which discloses a vanadium-containing catalyst composition in combination with a halogenating agent. In this publication, however, it is the support, not the vanadium compound, that is to be chlorinated.

EP-Al-0,022,658 discloses a catalyst of a mixture of a halogen-containing titanium compound, such as $TiCl_4$, and a halogen-containing vanadium compound, such as $VOCl_3$. The catalyst here concerned thus is a mixture catalyst of halogen-containing titanium compound and halogen-containing vanadium compound.

In spite of the many different catalysts that have thus been developed, there is, as far as is known, as yet no catalyst that combines the above-mentioned desirable properties. The present invention aims at obviating this shortcoming and at providing a catalyst which is based on vanadium, has a high activity, satisfactory hydrogen response, satisfactory comonomer response (butene response), long life, and which gives a polymer with a wide molecular weight distribution, a low proportion of fines and substantially no unsaturation.

These aims are achieved, in the present invention, by means of a catalyst composition which is the reaction production between

a) the product obtained by reacting a support which consists of activated silica, in a liquid alkane with an organometallic compound having the formula

$$MR_1R_2R_3$$

wherein M is a metal in group III of the Periodic Table, $R_1$ is Cl, Br, I or an alkyl group having 1-12 carbon atoms, $R_2$ and $R_3$ independently of each other are selected among H, Cl, Br, I alkyl groups having 1-12 carbon atoms, and alkoxy groups having 1-12 carbon atoms; and

b) a chlorinated oxygen-containing vanadium compound characterised in that the chlorinated oxygen-containing vanadium compound is the reaction product between vanadium pentoxide and a chlorinating agent selected among

i) $AlCl_3$, $TiCl_4$, $ZrCl_4$, $SbCl_5$, $SbOCl_3$, $SnCl_4$, $PCl_5$ and $POCl_3$;

ii) $COCl_2$, $(COCl)_2$, $SOCl_2$, $SO_2Cl_2$, $C_6H_5COCl$, $C_nH_{2n+1}COCl$ wherein n = 1-12; and

iii) hexachloropropylene and benzotrichloride.

Further characteristic features of the catalyst composition according to the invention will appear from the description below and the appended claims.

According to another aspect, the invention provides a process of producing an olefin polymer, said process being characterised in that an olefin monomer in the presence of hydrogen and, optionally, one or more comonomers is contacted, under polymerisation conditions, with a catalyst composition according to the invention.

The invention and its various components will now be described in greater detail.

The catalyst according to the invention affords an especially wide molecular weight distribution:

1) its hydrogen response provides for especially short molecules;

2) its high comonomer response greatly facilitates lowering the density;

3) its long life makes it possible to perform the polymerisation in two successive reactors arranged in accordance with 1) and 2), above.

In this manner, each polymer particle will contain an intimate mixture of very short and very long molecules, resulting in a very wide molecular weight distribution, whereby outstanding extrusion properties are obtained. The response to hydrogen gas and butene, respectively, of this catalyst is so good that the polymerisation can be conducted such that only the longest molecular chains contain comonomer. In this manner, outstanding physical properties are obtained, such as environmental stresscracking, ESCR, which is determined according to Bell's test, ASTM-D 1693-70. Environmental stresscracking is a phenomenon that may occur when polyethylene is subjected to high stress and, at the same time, is attacked by specific chemicals.

A normal Ti-based Ziegler catalyst usually has both hydrogen response, comonomer response and long life to make two-stage polymerisation possible. However, because of the inherent narrow molecular weight distribution of this catalyst, it is frequently only in the best cases that the maximum molecular weight distribution will be as wide as in one-stage polymerisation with the catalyst according to the present invention.

A normal chromium oxide catalyst cannot be used for two-stage polymerisation because its hydrogen response is too low. (Both the comonomer response and the life would suffice, but the hydrogen response would be too low.)

The support in the catalyst composition according to the invention is an inorganic oxide in the form of silica which has, on its outer surface or in its pores, hydroxyl groups capable of reacting with the organometallic compound described below. The characteristic features of the silica are not critical to the invention, but since they may affect the properties of the resulting polymer, for example its particle size, it is frequently advisable to pay regard to the silica properties, such as the number of hydroxyl groups, the particle size, the surface area and the pore volume. Thus, the particle size of the silica should be selected such that, in gas phase polymerisation, it gives a polymer having the desired particle size. An average particle size of the silica of about 10-600 $\mu$m, preferably about 30-100 $\mu$m, usually gives a suitable result. The suitable values of the other parameters of the silica are a surface area of about 50-1000 $m^2$/g, preferably about 100-400 $m^2$/g, and a pore volume of about 0.5-3.5 $cm^3$/g, preferably about 0.5-2 $cm^3$/g. Furthermore, the silica is activated by high-temperature treatment at about 200-900°C, preferably at about 600-700°C.

As mentioned above, the organometallic compound which is caused to react with the hydroxyl groups of the inorganic oxide, has the formula

$$MR_1R_2R_3$$

wherein M is a metal in group III of the Periodic Table,

$R_1$ is Cl, Br, I or an alkyl group having 1-12 carbon atoms,

$R_2$ and $R_3$ independently of each other are selected among H, Cl, Br, I, alkyl groups having 1-12 carbon atoms, and alkoxy groups having 1-12 carbon atoms. M may thus be aluminium, gallium or indium and preferably is aluminium. The alkyl groups which are relevant to $R_1$, $R_2$ and $R_3$, are for example methyl, ethyl, propyl, isopropyl, n-butyl, isobutyl, n-pentyl, isopentyl, t-pentyl, hexyl, 2-methylpentyl, heptyl, octyl, 2-ethylhexyl, nonyl, decyl, dodecyl. As examples of alkoxy groups relevant to $R_2$ and $R_3$, mention may be made of the alkoxy groups corresponding to the alkyl groups enumerated above.

As examples of useful organoaluminium compounds, mention may be made of trialkyl aluminium, dialkyl aluminium hydrides, dialkyl aluminium alkoxides, and alkyl aluminium dialkoxides, such as trimethyl aluminium, triethyl aluminium, tripropyl aluminium, tributyl aluminium, triisobutyl aluminium, isopropenyl aluminium, trihexyl aluminium, trioctyl aluminium, tridecyl aluminium, tridodecyl aluminium, and the corresponding alkoxy compounds in which one or two of the alkyl groups have been replaced by alkoxy groups, such as ethyl aluminium diethoxide, diethyl aluminium methoxide, ethyl aluminium sesquiethoxide, ethyl aluminium diisopropoxide, and mixtures thereof.

Especially preferred organoaluminium compounds in the present invention are di- and trialkyl aluminium compounds, in particular diethyl aluminium chloride (DEAC), triethyl aluminium (TEA), triisobutyl aluminium, trihexyl aluminium (TnHAl), trioctyl aluminium (TOAl).

The amount of organometal compound utilised for treating the support is not critical in the present invention, but should amount to at least about 0.1 mol of organometal compound per mol of hydroxyl groups on the surface of the support. If the number of available hydroxyl groups of the carrier is not known, it may be determined in per se known manner, for example by allowing a known amount of the support react with excess triethyl aluminium and determining the amount of ethane that is developed.

The chlorinated oxygen-containing vanadium compound is an important and especially characteristic component of the catalyst composition according to the invention. Its composition is not established, and it is necessary, in the context of the invention, to define the compound on the basis of the manner in which it has been obtained. Although the composition of the chlorinated oxygen-containing vanadium compound thus has not been established in the invention, it is pointed out that it does not agree with the composition of the vanadium compounds utilised by the prior art technique according to, for example, the above-mentioned British patent specification 1,489,410 and the European patent specification 0,110,695.

The chlorinated oxygen-containing vanadium compound of the catalyst composition according to the invention is prepared by causing vanadium pentoxide to react with a chlorinating agent.

The chlorination reaction is generally carried out by combining the vanadium pentoxide with the chlorinating agent, optionally in a high-boiling chlorinated solvent, and reflux-boiling the reaction mixture at ambient pressure, preferably in a protective atmosphere, such as nitrogen, at a temperature of 20-200°C. The reaction time varies between about 2 and 20 hours. The chlorinating agent should be present at least in an amount sufficient to provide the desired degree of chlorination of the vanadium pentoxide, and the chlorinating agent preferably is present in a molar excess. The proportion of the chlorinating agent also depends upon the chlorine content of the chlorinating agent, a chlorinating agent having a high chlorine content being used in lower proportion than a chlorinating agent having a low chlorine content. The molar ratio between the chlorinating agent and the vanadium pentoxide is preferably from about 1:4 to about 10:1, more preferred from about 4:1 to about 8:1.

When the chlorination reaction has terminated, the resulting mixture is used with the reaction product as it is for preparing the catalyst composition, but first any solids in the mixture must be removed, for example by filtering the mixture.

As mentioned before, the chlorinating agent consists of

i) chlorides of metals from groups III-V in the Periodic Table which are selected among $AlCl_3$, $TiCl_4$, $ZrCl_4$, $SbCl_5$, $SbOCl_3$, $SnCl_4$, $PCl_5$, and $POCl_3$;

ii) acid chlorides selected among $COCl_2$, $(COCl)_2$, $C_6H_5COCl$, $SOCl_2$, $SO_2Cl_2$ and $C_nH_{2n+1}COCl$, wherein n=1-12, for example $CH_3COCl$ and $C_2H_5COCl$; and

iii) chlorinated allylic or benzylic hydrocarbons selected among hexachloropropylene and benzotrichloride.

Upon chlorination of the vanadium compound with a metal chloride, the latter is reacted with the oxygen-containing vanadium compound, the reaction being optionally conducted in a high-boiling chlorinated solvent, such as pentachloroethane, heptachloropropane, tetrachloroethylene, cyclohexyl chloride, benzotrichloride, hexachloroethane, hexachlorocyclohexane, or 1,2-dibromomethane. The reaction mixture is reflux-boiled at a temperature of about 20-200°C, preferably about 90-140°C. The reaction time generally is about 2-20 hours, preferably about 5-15 hours. The molar ratio between metal chloride and vanadium pentoxide is suitably about 4:1 to about 8:1, preferably about 6:1 to about 7:1.

The acid chlorides are frequently liquids and therefore can usually be mixed with the vanadium compound. If desired, a high-boiling chlorinated solvent can be added to the mixture. The reaction mixture is reflux-boiled at a temperature of about 20-200°C, preferably about 50-120°C. The reaction time generally is about 2-20 hours, preferably about 2-15 hours. The molar ratio between acid chloride and vanadium pentoxide is suitably about 4:1 to about 8:1, preferably about 4:1 to about 7:1.

As with the chlorinating agents previously mentioned, the clorination reaction, if use is made of hexachloropropylene or benzotrichloride, may optionally be carried out in a high-boiling halogenated solvent,

4

such as pentachloroethane, heptachloropropane, octachloropropane, hexachlorocyclohexane or chlorinated $C_{12}$-$C_{18}$ paraffins. The chlorination is carried out in the manner previously described, and the reaction mixture is reflux-boiled at a temperature of about 20-200°C, preferably about 60-160°C. The reaction time is generally about 2-20 hours, preferably about 3-16 hours. The molar ratio between the chlorinating agent and the vanadium pentoxide is suitably about 4:1 to about 8:1, preferably about 6:1 to about 7:1.

It is pointed out that the high-boiling chlorinated hydrocarbon which is used as solvent, may also be used itself as chlorinating agent for the oxygen-containing vanadium compound, but then the temperature must be far higher. As regards the preparation of a chlorinated oxygen-containing vanadium compound by reaction between vanadium pentoxide and benzotrichloride, it appears from literature that this reaction cannot occur until the temperature is between 200 and 300°C (Gmelin V[B] p. 89).

We have now surprisingly found that this reaction, if liquid benzotrichloride is used, can be carried out at a far lower temperature, for example about 55-100°C, preferably about 60-70°C.

The catalyst composition according to the present invention is prepared as follows.

The support material employed is silica which must be activated, by which is meant that it shall be free from adsorbed water, and that its surface must have hydroxyl groups capable of reacting with the organometallic compound. The silica is activated by drying in a fluidising bed with dry nitrogen gas as fluidising agent at a temperature of about 100-1000°C, preferably about 550-700°C, for the requisite period of time, usually about 5-16 hours. When the silica has been activated, it is caused to react with the above-mentioned organometallic compound which, for the sake of simplicity, is exemplified hereinafter by triethyl aluminium (TEA), trioctyl aluminium and trihexyl aluminium, at a suitable temperature. The amount of aluminium alkyl should at least correspond to 0.1 mol/mol of hydroxyl groups of the silica. The reaction is usually carried out in a liquid hydrocarbon in which the silica is slurried and the aluminium alkyl is soluble. Suitable hydrocarbons are alkanes having 4-8 carbon atoms, such as isobutane, pentane, isopentane, hexane, cyclohexane, heptane, isooctane, or mixtures thereof. The hydrocarbon preferably is pentane. The reaction can be carried out at ambient pressure or elevated pressure and at ambient temperature or elevated temperature, usually 15-50°C, such as the hydrocarbon reflux temperature. The reaction time must be sufficient to ensure the reaction between the hydroxyl groups of the silica and the aluminium alkyl and generally amounts to at least 5 min., usually 15-30 min.

After that, the treated silica support must be treated with the chlorinated oxygen-containing vanadium compound according to the invention. This vanadium compound has previously been prepared in the manner described above. The chlorinated vanadium compound according to the invention is soluble in the hydrocarbon within which the treated silica support is slurried, i.e. in alkanes having 4-8 carbon atoms, as has been mentioned before. The vanadium compound can be added to the slurry of the treated support either directly or in the form of a solution of the vanadium compound in the liquid hydrocarbon, preferably pentane. The reaction of the vanadium compound with the treated support is practically instantaneous, but usually the treatment is allowed to proceed for some minutes, preferably about 10-60 minutes, at a temperature of about 15-50°C. In order not to damage or poison the catalyst, the reaction should be carried out in per se known manner by using an inert gas atmosphere, such as nitrogen. After the reaction between the treated silica support and the chlorinated vanadium compound is terminated, the catalyst is dried by removing the liquid hydrocarbon in some suitable manner, for example by filtration, centrifugation, evaporation, or percolation with nitrogen. The catalyst can then be used for gas phase polymerisation reaction. If the catalyst is to be used for liquid phase polymerisation, so-called slurry polymerisation, the liquid hydrocarbon need not be removed, and the catalyst composition can be used as it is.

An alternative technique of preparing the catalyst is to dry the treated silica support and then to supply the chlorinated vanadium compound in the form of a solution to the support, which can be done by, for example, arranging the treated silica support as a fluidised bed and adding the liquid with the chlorinated vanadium compound to the fluidised bed. In this case, the finished catalyst composition need not subsequently be dried.

Irrespective of the technique by which the catalyst is prepared, it is important that the preparation be conducted in an inert atmosphere, such as nitrogen gas.

The catalyst composition according to the invention, prepared as described above, is suitable for the polymerisation of olefins, preferably ethylene. The polymerisation can be conducted in per se known manner, for example as a solution polymerisation, slurry polymerisation or gas phase polymerisation, gas phase polymerisation being especially preferred. The polymerisation is generally carried out at a temperature of about 0-120°C, and the polymerisation pressure is not critical and generally amounts to about 1-40 bars, preferably about 15-25 bars. The polymerisation preferably is a polymerisation of ethylene, alone or together with other comonomers consisting of higher α-olefins, such as butene, the polymerisation being in the form of a gas phase method at an excess pressure of about 1-40 bars, suitably about 15-25 bars, and a temperature of about 65-115°C. The comonomers utilised generally are α-olefins containing 3-12 carbon atoms, such as propylene, 1-butene, 1-pentene, 4-methyl-1-pentene, 1-hexene, 1-heptene, 1-octene, 1-nonene, 1-decene, 1-dodecene, and mixtures thereof. During the polymerisation reaction, conventional polymerisation additives, such as hydrogen, haloalkanes, etc., are usually added. The haloalkanes act as so-called promoters and increase the catalyst activity. Examples of conventional promoters are chloroform, dichloromethane, or carbon tetrachloride.

Instead of the known haloalkane promoters, it is preferred in the invention to use a new type of promoter which, as far as is known, has not previously been used in the polymerisation of olefins. These new promoters are high-boiling halogenated hydrocarbons, preferably aliphatic hydrocarbons having at least one halogen atom per molecule. Under normal conditions, i.e. at ambient pressure and a temperature of about 20-110°C, these new promoter compounds are liquid or solid compounds. They can be represented by the general formula $C_nH_{2n+2-z}X_z$, wherein X=Cl, Br, F; n=2-25 and $1 \leq z \leq 2n+2$. The halogen atoms included in the promoter may consist of chlorine, bromine or fluorine, chlorine being preferred. Furthermore, the promoter may consist of a single compound of the type referred to or of a mixture of different such compounds. As examples of high-boiling or solid halogenated hydrocarbons useful as promoters in the present invention, mention may be made of pentachloroethane, hexachloroethane, heptachloropropane, octachloropropane, hexachlorocyclohexane, trichloroethane, dibromoethane, dichloroethane, trichloroethane, tetrachloroethane and chlorinated paraffin hydrocarbons having 11-22 carbon atoms. At present, pentachloroethane, heptachloroethane and chloroparaffin in combination with chloroform are preferred. Hexachloroethane is less preferred since it tends to sublime. The new promoter type need not be supplied in the high contents that are usual for prior art promoters, and in the present invention it was found that molar ratios as low as 3:1 between promoter and vanadium in the catalyst composition gives an excellent catalyst activity. For prior art promoters, molar ratios of about 20:1 are usually employed.

A prior condition for obtaining the above-mentioned low molecular ratio between promoter and catalyst, i.e. to obtain high promoter activity, is furthermore that the promoter is added directly to the catalyst composition, preferably in connection with the preparation thereof, and not to the polymerisation reaction mixture in the polymerisation reactor, as is usual with prior art promoters. By adding the promoter directly to the catalyst and not to the mixture in the reactor, so-called reactor runaway is prevented, which is an advantage.

There are different possibilities of adding the promoter to the catalyst composition. One possibility is to add the promoter to the catalyst composition prepared in the manner described above, whereupon the promoter-containing catalyst composition is dried, if necessary. A further possibility is to utilise the chlorinated promoter as a solvent and/or chlorinating agent in the preparation of the chlorinated vanadium compound according to the present invention and thus to supply both chlorinated vanadium compound and promoter at the same time to the support after the chlorination reaction, whereby a smooth production of promoter-containing catalyst composition is obtained.

The invention as described above will now be further illustrated by the following nonrestrictive Examples.

In the Examples, the melt index (MI) has been determined using ISO-R-292.

MI is used for determining the flow characteristics of the polyethylene at 190°C and constant load. The melt index indicates the number of grams of material extruded through an orifice in 10 min. at constant temperature and load. MI has the unit g/10 min. or dg/min. where dg stands for decigram.

$MI_2$, $MI_5$ and $MI_{21}$ indicate the melt index with a load of 2.16, 5.0 and 21.6 kg, respectively. MFR stands for "melt flow ratio", i.e. a quotient between different melt indexes, for example

$$MFR_{21/5} = \frac{MI_{21}}{MI_5} .$$

MFR which is without denomination, is frequently proportional to the molecular weight distribution (MWD), i.e. the distribution of the length of the polyethylene chains. Another measure of the distribution is the polydispersity index Q which is defined as $\overline{M}w/\overline{M}n$ where $\overline{M}w$ and $\overline{M}n$ are average values of weight and number, respectively.

## EXAMPLE 1

4.32 g of activated silica (silica 955 from Davison Chemical Division, W.R. Grace and Company, Industrial Chemicals Department, Baltimore, Maryland, USA, activation temperature 600°C, average particle size about 30-40 μm, surface area about 280-355 $m^2$/g, pore volume 1.55-2.0 $cm^3$/g) was slurried in 13.0 ml of pentane, whereupon 6.4 ml of a 10.7% solution of TEA in pentane was added, and the whole was allowed to react for 30 min.

A chlorinated oxygen-containing vanadium compound was prepared separately by causing 2.18 g of $V_2O_5$ to react with 9.6 g of $AlCl_3$ in 12 ml of pentachloroethane. The reaction was carried out at a temperature of 110°C and for 0.5 h, part of $V_2O_5$ being dissolved. The solid residue was filtered off.

0.13 ml of the solution with the resulting chlorinated oxygen-containing vanadium compound was then added to the slurry of TEA-treated silica suport and allowed to react for 30 min. in an inert nitrogen atmosphere at room temperature.

The solvent was then removed by percolation with nitrogen gas, and a dry pulverulent catalyst was obtained. To the pulverulent catalyst, 1.5 ml of pentachloroethane was added as promoter. The promoter was added dropwise and mixed with the catalyst until all promoter had been absorbed by the catalyst. The resulting catalyst composition was then ready for use for polymerisation of ethylene.

The polymerisation was carried out in the slurry phase in a 3-litre reactor of stainless steel. The diluent consisted of 1.5 l of carefully purified n-pentane. By means of a special device, about 0.5 g of catalyst in dry form was added. The vanadium content of the catalyst before the promoter was added was 0.29%, and its aluminium content before the promoter addition was 2.01%. 5 ml of 10% TEA solution in pentane was injected.

In the ethylene supply conduit, a 500-ml steel cylinder had been mounted which was filled with hydrogen gas of 7-bars as molecular weight controller. The reaction was initiated by raising the pressure in the reactor to 15 bars with ethylene via the hydrogen-containing cylinder.

The polymerisation was conducted under intense agitation at 90°C for 90 min.

The polymerisation reaction gave 114 g of polyethylene, which corresponds to a productivity of 158 g of polyethylene/g of catalyst, h. The values of $MI_{21}$ and $MFR_{21/5}$ of the polyethylene were respectively 86.6 and 18.8.

## EXAMPLE 2

A chlorinated oxygen-containing vanadium compound was prepared by causing 2.18 g (12 mmol) of $V_2O_5$ to react with 6 ml (84 mmol) of acetyl chloride. The reaction was carried out with reflux boiling at 110°C for 2 hours, all $V_2O_5$ being dissolved.

0.24 ml of the solution with the resulting chlorinated oxygen-containing vanadium compound was then added to a slurry, prepared in accordance with Example 1, of 4.55 g of TEA-treated silica support (silica 955, 600°C) in 12.4 ml of pentane and allowed to react for 30 min. in an inert nitrogen atmosphere at room temperature.

A dry pulverulent catalyst was then prepared and treated with 0.91 ml of pentachloroethane promoter in the manner described in Example 1. The vanadium content of the catalyst, before the promoter was added, was 1.93%, and its aluminium content, before the promoter was added, was 2.07%.

0.5 g of the resulting catalyst composition was then used for polymerisation of ethylene under the conditions stated in Example 1. 834 g of ethylene polymer was obtained, which corresponds to a productivity of 1090 g of polyethylene/g of catalyst, h. The values of $MI_{21}$ and $MFR_{21/5}$ of the polyethylene were respectively 53.2 and 16.2.

## EXAMPLE 3

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was carried out under reflux boiling at 70°C for 3 hoursf all $V_2O_5$ being dissolved.

0.48 ml of the solution with the resulting chlorinated oxygen-containing vanadium compound was then added to a slurry of 5.12 g of TEA-treated silica support (silica 955, 600°C) in 13.9 ml of pentane prepared in accordance with Example 1 and allowed to react for 30 min. in an inert nitrogen atmosphere at room temperature.

A dry pulverulent catalyst was then prepared from the reaction mixture in accordance with Example 1 and treated with 1.02 ml of pentachloroethane promoter. The vanadium content of the catalyst before the promoter was added was 0.79%, and its aluminium content before the promoter was added was 2.39%.

0.35 g of the finished catalyst composition was then used in a polymerisation test according to Example 1. 290 g of polyethylene was obtained, which corresponds to a productivity of 644 g of polyethylene/g of catalyst, h. The values of $MI_{21}$ and $MFR_{21/5}$ were respectively 90.3 and 17.9.

## EXAMPLE 4

A chlorinated oxygen-containing vanadium compound was prepared by causing 2-18 g (12 mmol) of $V_2O_5$ to react with 10 ml (71 mmol) of hexachloropropylene. The reaction was carried out under reflux boiling at a temperature of 110°C for 16 hours, whereupon the temperature was raised to 180°C for 2 hours. The reaction gave a gel-like lump that was extracted with pentachloroethane.

0.57 ml of the extract with the resulting chlorinated oxygen-containing vanadium compound was then added to a slurry, prepared in accordance with Example 1, of 5.40 g of TEA-treated silica support (silica 955, 600°C)

7

EP 0 378 556 B1

in 14.7 ml of pentane and allowed to react for 30 min. in an inert nitrogen atmosphere at room temperature.

A dry pulverulent catalyst prepared in accordance with Example 1 was then treated with 1.08 ml of pentachloroethane promoter. 0.45 g of the resulting catalyst composition was then used for polymerisation tests. The vanadium content of the catalyst before the promoter was added, was 0.38%, and its aluminium content before the promoter was added, was 1.79%.

The polymerisation test was conducted in the manner described in Example 1, and a yield of 225 g of polyethylene was obtained, which corresponds to a productivity of 300 g of polyethylene/g of catalyst, h. The values of $MI_{21}$ and $MFR_{21/5}$ were respectively 314 and 18.0.

## EXAMPLE 5

A chlorinated oxygen-containing vanadium compound was prepared by causing 2.18 g (12 mmol) of $V_2O_5$ to react with 11.8 ml (84 mmol) of hexachloropropylene in 20 ml of pentachloroethane. The reaction was carried out under reflux boiling at a temperature of 130°C for 16 hours, whereupon the temperature was raised to 160°C for 16 hours. During the reaction, the main part of $V_2O_5$ was dissolved. The remaining $V_2O_5$ was filtered off, and the solution was washed with methylene chloride.

0.73 ml of solution with the resulting chlorinated oxygen-containing vanadium compound was then added to a slurry, prepared according to Example 1, of 6.85 g of TEA-treated silica support (silica 955, 600°C) in 18.6 ml of pentane and allowed to react for 30 min. in an inert nitrogen atmosphere at room temperature.

In the same manner as in Example 1, a dry pulverulent catalyst was then prepared from the slurry, the catalyst being treated with 1.37 ml of pentachloroethane promoter. The vanadium content of the catalyst before the promoter was added, was 0.47% and its aluminium content before the promoter was added, was 1.89%. 0.5 g of the resulting catalyst composition was then used for a polymerisation test.

The polymerisation test was conducted in accordance with Example 1, and 304 g of polyethylene was obtained, which corresponds to a productivity of 322 g of polyethylene/g of catalyst, h. The values of $MI_{21}$ and $MFR_{21/5}$ were respectively 120 and 20.4.

## EXAMPLE 6

A chlorinated oxygen-containing vanadium compound was prepared by causing 2.18 g (12 mmol) of $V_2O_5$ to react with 11.9 ml (84 mmol) of benzotrichloride. The reaction was carried out under reflux boiling at 110°C for 2 hours, all $V_2O_5$ being dissolved.

0.30 ml of the solution with the resulting chlorinated oxygen-containing vanadium compound was then added to a slurry, prepared according to Example 1, of 4.89 g of TEA-treated silica support (silica 955, 600°C) in 13.3 ml of pentane and allowed to react for 30 min. in an inert nitrogen atmosphere at room temperature.

A dry pulverulent catalyst was then prepared from the slurry, in accordance with Example 1, and the catalyst was treated with 0.22 ml of pentachloroethane promoter according to Example 1 to obtain the finished catalyst composition. The vanadium content of the catalyst before the promoter was added, was 0.69%, and its aluminium content before the promoter was added, was 2.18%. 0.5 g of this catalyst composition was then used for a polymerisation test.

The polymerisation test was conducted in accordance with Example 1, and 617 g of polyethylene was obtained, which corresponds to 709 g of polyethylene/g of catalyst, h. The values of $MI_{21}$ and $MFR_{21/5}$ were respectively 38.0 and 19.4.

## EXAMPLE 7

A chlorinated oxygen-containing vanadium compound was prepared by causing 2.18 g (12 mmol) of $V_2O_5$ to react with 15.0 g (72 mmol) of $PCl_5$ in 20 ml of pentachloroethane. The reaction was carried out under reflux boiling at 110°C for 24 hours, all $V_2O_5$ being dissolved.

0.5 ml of solution with the resulting chlorinated oxygen-containing vanadium compound was then added to a slurry, prepared according to Example 1, of 5.44 g of TEA-treated silica support (silica 955) in 14.8 ml of pentane and allowed to react for 30 min. in an inert nitrogen atmosphere at room temperature.

A dry pulverulent catalyst was then prepared from the slurry in accordance with Example 1 and treated with 1.08 ml of pentachloroethane promoter according to Example 1. The vanadium content of the catalyst before the promoter was added, was 0.43%, and its aluminium content before the promoter was added, was 2.17%. 0.40 g of the finished catalyst composition was then used for a polymerisation test.

The polymerisation test was carried out in accordance with Example 1, and 175 g of polyethylene was obtained, which corresponds to a productivity of 254 g of polyethylene/g of catalyst, h. The values of $MI_{21}$ and

8

$MFR_{21/5}$ were respectively 1490 and 15.9.

## EXAMPLE 8

A chlorinated oxygen-containing vanadium compound was prepared by causing 2.18 g (12mmol) of $V_2O_5$ to react with 12.6 ml (144 mmol) of oxalylchloride and 0.26 ml (2.4 mmol) of $TiCl_4$. 12 ml of pentachloroethane was used as diluent. The reaction was carried out under reflux boiling at 110°C for 64 hours. After the reaction, about 1 g of solid residue remained.

0.26 ml of the solution of the resulting chlorinated oxygen-containing vanadium compound was then added to a slurry, prepared in accordance with Example 1, of 4.40 g of silica support (silica 955, 600°C) treated with 6.5 ml of a 10.7% solution of TEA, in 13.2 ml of pentane and allowed to react for 30 min. in an inert nitrogen atmosphere at room temperature. The desired vanadium content was 0.30 mmol/g of silica.

A dry pulverulent catalyst was then prepared from the slurry in accordance with Example 1 and treated with 0.97 ml of pentachloroethane promoter. 0.5 g of the resulting catalyst composition was then used for a polymerisation test.

The polymerisation test was carried out in accordance with Example 1, and 451 g of polyethylene was obtained, which corresponds to a productivity of 601 g of polyethylene/g of catalyst, h. The values of $MI_{21}$ and $MFR_{21/5}$ were respectively 240 and 16.7.

## EXAMPLE 9

A chlorinated oxygen-containing vanadium compound was prepared by causing 2.18 g (12 mmol) of $V_2O_5$ to react with 11.9 ml (84 mmol) of benzotrichloride. The reaction was carried out under reflux boiling at 110°C for 2 hours, all $V_2O_5$ being dissolved.

6.04 g of silica support (silica 955, 600°C) was slurried in 18.1 ml of pentane, and 1.98 ml of 20% trimethyl aluminium (TMA) was added at room temperature. TMA was allowed to react with the support for 30 min. 0.77 ml of solution with the chlorinated oxygen-containing vanadium compound was then added to the slurry and allowed to react at room temperature in an inert nitrogen atmosphere. The desired vanadium content was 0.30 mmol per gram of silica.

The catalyst was dried at 50°C in a nitrogen atmosphere and then treated with 2.90 ml of chloroform. 0.3 g of the resulting catalyst composition was then used for a polymerisation test.

The polymerisation test was carried out in accordance with Example 1, except that the hydrogen pressure in the hydrogen-containing steel cylinder had been lowered to 6 bars, and that 5 ml of 10% triisobutyl aluminium (TIBA) was used as cocatalyst instead of TEA. The polymerisation gave 743 g of polyethylene, which corresponds to a productivity of 1651 g of polyethylene/g of catalyst, h. The values of $MI_{21}$ and $MFR_{21/5}$ were respectively 3.23 and 22.6.

## EXAMPLE 10

A chlorinated oxygen-containing vanadium compound was prepared by causing 2.18 g (12 mmol) of $V_2O_5$ to react with 11.9 ml (84 mmol) of benzotrichloride. The reaction was carried out under reflux boiling at 110°C for 2 hours, all $V_2O_5$ being dissolved.

3.84 g of silica support (silica 955, 600°C) was slurried in 11.5 ml of pentane and allowed to react with 3.48 ml of 10% triethylborane (TEB) at room temperature for 30 min. 0.42 ml of the solution with the chlorinated oxygen-containing vanadium compound was then added to the slurry and allowed to react at room temperature in an inert nitrogen atmosphere. The desired vanadium content was 0.3 mmol/g of silica.

The catalyst was dried at 50°C in a nitrogen gas atmosphere and then treated with 1.84 ml of chloroform. 0.3 g of the resulting catalyst composition was then used for a polymerisation test.

The polymerisation test was carried out in accordance with Example 1, except that the hydrogen gas pressure in the hydrogen-containing steel cylinder was 6 bars, and that 5 ml of 10% TIBA was used as cocatalyst instead of TEA. The polymerisation gave 198 g of polyethylene, which corresponds to a productivity of 440 g of polyethylene/g of catalyst, h. The values of $MI_{21}$ and $MFR_{21/5}$ were respectively 18.9 and 17.0.

## EXAMPLE 11

A chlorinated oxygen-containing vanadium compound was prepared by causing 2.18 g (12 mmol) of $V_2O_5$ to react with 11.9 ml (84 mmol) of benzotrichloride. The reaction was carried out under reflux boiling at 110°C for 2 hours, all $V_2O_5$ being dissolved.

3.07 g of silica support (silica 955, 600°C) was slurried in 9.2 ml of pentane. 0.24 ml of Siloxal HI [diethyl(methylsilanolato)aluminium obtained from Schering] was deposited on the silica support at room temperature for 30 min. 0.26 ml of solution with the chlorinated oxygen-containing vanadium compound was then added to the slurry and allowed to react at 40°C for 15 min. in an inert nitrogen gas atmosphere. The desired vanadium content was 0.4 mmol/g of silica.

The catalyst was dried at 70°C in a nitrogen gas atmosphere and then treated with 1.23 ml of chloroform. 0.35 g of the resulting catalyst composition was then used for a polymerisation test.

The polymerisation was carried out in accordance with Example 1, except that the hydrogen pressure in the hydrogen-containing steel cylinder was 6 bars, and that 5 ml of 10% TIBA was used as cocatalyst instead of TEA. Polymerisation was carried out for 90 min. and gave 579 g of polyethylene, which corresponds to a productivity of 1103 g of polyethylene/g of catalyst, h. The values of $MI_{21}$ and $MFR_{21/5}$ were respectively 3.3 and 20.6.

## EXAMPLE 12

A chlorinated oxygen-containing vanadium compound was prepared by causing 2.18 g (12 mmol) of $V_2O_5$ to react with 11.9 ml (84 mmol) of benzotrichloride. The reaction was carried out under reflux boiling at 110°C for 2 hours, all $V_2O_5$ being dissolved.

4.97 g of silica support (silica 955, 600°C) was slurried in 14.9 ml of pentane, and 2.5 ml of Magala 7.5 E (dibutyl magnesium-triethyl aluminium complex, 7.5 $(n-C_4H_9)_2$ Mg x $(C_2H_5)_3Al$) (molar ratio Mg:V = 1:1, obtained from Texas alkyls) was deposited on silicane at 40°C for 15 min. 0.42 ml of the solution with the chlorinated oxygen-containing vanadium compound was then added to the slurry and allowed to react at 40°C for 15 min. in an inert nitrogen gas atmosphere. The desired vanadium content was 0.4 mmol/g of silica.

The catalyst was dried at 75°C in nitrogen gas and then treated with 1.99 ml of $CHCl_3$. 0.3 g of the resulting catalyst composition was then used for a polymerisation test.

The polymerisation was conducted in accordance with Example 1, except that the hydrogen pressure in the hydrogen-containing steel cylinder was 6 bars, and that 5 ml of 10% TIBA was used as cocatalyst instead of TEA. The polymerisation gave 435 g of polyethylene, which corresponds to a productivity of 966 g of polyethylene/g of catalyst, h. The values of $MI_{21}$ and $MFR_{21/5}$ were respectively 10.1 and 18.7.

## EXAMPLE 13

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was carried out under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left in room temperature for 24 hours.

0.91 ml of the solution with the resulting chlorinated oxygen-containing vanadium compound was then added to a slurry of 5.94 g of TEA-treated silica support (silica Davison 955, 600°C) in 15.9 ml of pentane and allowed to react for 30 min. in an inert nitrogen atmosphere at room temperature. The desired vanadium content was 0.30 mmol/g of silica.

A dry pulverulent catalyst was then prepared in accordance with Example 1, and the dry catalyst was treated with 3.0 ml of chloroform in accordance with Example 1.

0.3 g of the resulting catalyst composition was then used for polymerisation of ethylene under the conditions stated in Example 1, except that 5 ml of 10% TIBA was used as cocatalyst. 671 g of polyethylene was obtained, which corresponds to a productivity of 1491 g of polyethylene/g of catalyst, h. The values of $MI_{21}$ and $MFR_{21/5}$ of the polyethylene were respectively 10.0 and 21.4.

## EXAMPLE 14

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was carried out under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left at room temperature for 24 hours.

0.92 ml of the solution with the resulting chlorinated oxygen-containing vanadium compound was then added to a slurry of 6.01 g of TEA-treated silica support (Davison 955; molar ratio TEA:V = 3.5:1; activation temperature 500°C) in 16.1 ml of pentane, and allowed to react for 30 min. in an inert nitrogen atmosphere at room temperature. The desired vanadium content was 0.30 mmol/g of silica.

A dry pulverulent catalyst was then prepared from the reaction mixture in accordance with Example 1 and treated with 3.0 ml of chloroform (molar ratio chloroform:V = 20:1).

0.25 g of the resulting catalyst composition was then used in a polymerisation test according to Example 1, except that 5 ml of 10% TIBA was used as cocatalyst. 522 g of polyethylene was obtained, which corresponds to a productivity of 1392 g of polyethylene/g of catalyst, h. The values of $MI_{21}$ and $MFR_{21/5}$ were respectively 12.2 and 19.8.

### EXAMPLE 15

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was carried out under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left at room temperature for 24 h.

0.81 ml of the solution with the resulting chlorinated oxygen-containing vanadium compound was then added to a slurry of 4.79 g of TEA-treated silica support (silica Davison 955, 600°C) in 13.0 ml of pentane, and allowed to react for 30 min. in an inert nitrogen atmosphere at room temperature. The ratio of TEA:V was 2.7:1. The desired vanadium content was 0.33 mmol/g of silica.

A dry pulverulent catalyst was then prepared from the reaction mixture in accordance with Example 1, and the dried catalyst was treated with 1.55 ml of pentachloroethane.

0.35 g of the finished catalyst composition was then used in a polymerisation test according to Example 1, and 946 g of polyethylene was obtained, which corresponds to a productivity of 1802 g of polyethylene/g of catalyst, h. The values of $MI_{21}$ and $MFR_{21/5}$ were respectively 3.92 and 24.5.

### EXAMPLE 16

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was carried out under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left at room temperature for 24 hours.

0.83 ml of the solution with the chlorinated oxygen-containing vanadium compound was then added to a slurry of 4.59 g of TEA-treated silica support (silica Davison 955, 600°C; ratio TEA:V = 1:1) in 13.3 ml of pentane, and allowed to react for 30 min. in an inert nitrogen atmosphere at room temperature. The desired vanadium content was 0.33 mmol/g of silica.

A dry pulverulent catalyst was then prepared from the reaction mixture in accordance with Example 1 and treated with 1.58 ml of pentachloroethane promoter.

0.35 g of the finished catalyst composition was then used in a polymerisation test in accordance with Example 1. 515 g of polyethylene was obtained, which corresponds to a productivity of 981 g of polyethylene/g of catalyst, h. The values of $MI_{21}$ and $MFR_{21}$ were respectively 10.5 and 22.4.

### EXAMPLE 17

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was conducted under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left at room temperature for 24 hours.

0.79 ml of the solution with the resulting chlorinated oxygen-containing vanadium compound was then added to a slurry of 5.15 g of TEA-treated silica support (silica Davison 955) in 14 ml of pentane and allowed to react for 30 min. in an inert nitrogen atmosphere at room temperature. The desired vanadium compound was 0.30 mmol/g of silica.

10.2 ml of a 27.2% solution of hexachloroethane in pentane was added to the slurry, which corresponds to a molar ratio of 6:1 between hexachloroethane and vanadium. The catalyst was dried in a nitrogen gas atmosphere at 45°C.

0.30 g of the finished catalyst composition was then used in a polymerisation test in accordance with Example 1, except that 5 ml of 10% TIBA was used as cocatalyst, and that the pressure in the hydrogen-containing steel cylinder was 6 bars. 676 g of polyethylene was obtained, which corresponds to a productivity of 1502 g of polyethylene/g of catalyst, h. The values of $MI_{21}$ and $MI_{21/5}$ were respectively 3.0 and 21.9.

## EXAMPLE 18

A chlorinated oxygen-containing vanadium compound was prepared by causing 2.18 g (12 mmol) of $V_2O_5$ to react with 4.38 ml (60.4 mmol) of thionyl chloride in 10 ml of pentachloroethane. The reaction was conducted under reflux boiling at 70°C for 3 hours, all $V_2O_5$ being dissolved. Sodium carbonate was activated in nitrogen gas at 200°C. The activated sodium carbonate was then added to the resulting solution of chlorinated oxygen-containing vanadium compound and left at room temperature for 24 hours.

1.19 ml of the solution with the resulting chlorinated oxygen-containing vanadium compound was then added to a slurry of 8.9 g of trioctyl aluminium-treated (TOAL) silica support (silica Davison 955, 600°C) in 21 ml of pentane and allowed to react for 30 min. in an inert nitrogen atmosphere at room temperature. The ratio of TOAL:V was 2.5:1. The desired vanadium content was 0.3 mmol/g of silica.

A dry pulverulent catalyst was then prepared and treated with 4.3 ml of chloroform in accordance with Example 1.

0.31 g of the resulting catalyst composition was then utilised for polymerisation of ethylene under the conditions stated in Example 1, except that the hydrogen gas pressure in the hydrogen-containing steel cylinder was 6 bars, and that 5 ml of 10% TIBA was used as cocatalyst instead of TEA. The polymerisation gave 845 g of polyethylene, which corresponds to a productivity of 1817 g of polyethylene/g of catalyst, h. The values of $MI_{21}$ and $MFR_{21/5}$ of the polyethylene were respectively 4.5 and 19.5.

## EXAMPLE 19

A chlorinated oxygen-containing vanadium compound was prepared by causing 13.8 g of $V_2O_5$ to react with 64 ml of benzotrichloride. The reaction was carried out under reflux boiling at 70°C for 3 hours, all $V_2O_5$ being dissolved.

507 g of silica (silica Davison 955, 800°C) was slurried in 2 litres of pentane. 493 ml (0.3 mol) of diethyl aluminium chloride (DEAC) was added to the slurry and allowed to react with the silica at room temperature for 30 min. in an inert nitrogen atmosphere.

The solution with the resulting chlorinated oxygen-containing vanadium compound was then added to the DEAC-treated silica, and the resulting catalyst composition was dried under nitrogen gas at 45°C.

In an inert nitrogen gas atmosphere, 192 g of pentachloroethane was then added, and then 113 g of chloroform. The molar ratio of vanadium/pentachloroethane was 6:1, and the molar ratio of vanadium/chloroform was 6:1.

The resulting catalyst composition was then utilised for polymerisation of ethylene. The polymerisation was conducted in a slurry phase and occurred in two stages. In the ethylene supply conduit, a 500-ml steel cylinder was mounted which was filled with hydrogen gas to a pressure of 8.5 bars. The reaction was initiated by raising the pressure in the reactor to 10.3 bars with ethylene via the hydrogen-containing steel cylinder. The temperature was 98°C. Under these conditions, 480 g of polyethylene was produced. The reactor vessel was then cooled to 82°C, and 2 x 170 ml of 1-hexene was added to the reactor. The ethylene pressure was then raised to 18.4 bars, and polymerisation continued until 480 g of polyethylene had been produced in the second stage. The values of $MI_{21}$ and $MFR_{21/5}$ were respectively 14.7 and 38.5.

The polyethylene was mixed in a Brabender mill with 500 ppm of stabiliser, type Irganox 1076, 800 ppm of Zn stearate, and 800 ppm of stabiliser, type Ultranox 626.

Stresscracking was tested according to Bell. After a testing time of 3552 hours, all test specimens were crack-free (0% rupture).

## EXAMPLE 20

This Example illustrates the production of linear low-pressure polyethylene (LLD) by using the catalyst composition according to the invention. As will appear from the Example, the catalyst composition according to the invention gives a higher MFR in the polyethylene, i.e. a wide molecular weight distribution, at high MI. The catalyst composition gives no fines.

A chlorinated oxygen-containing vanadium compound was prepared by causing 15.3 g of $V_2O_5$ to react with 71 ml of benzotrichloride. The reaction was carried out under reflux boiling at 70°C for 3.5 hours, all $V_2O_5$ being dissolved.

The solution with the resulting chlorinated oxygen-containing vanadium compound was then added to a

EP 0 378 556 B1

slurry, prepared in accordance with Example 1, of 614 g of TEA-treated silica support (silica Davison 955, 600°C) in 2.7 l of pentane and allowed to react for 30 min. in an inert nitrogen atmosphere.

The catalyst was dried in the same manner as in Example 1 under nitrogen gas at 45°C.

204 g of pentachloroethane and 60 g of chloroform were carefully added in an inert nitrogen gas atmosphere to the dried catalyst.

A polymerisation test was carried out in the gas phase in a pilot reactor. The production was about 10 kg/h. The reactor temperature was 90°C. The total pressure in the reactor was 18 bars. The molar ratio between hydrogen and ethylene during polymerisation was 0.03:1 and between hexene and ethylene 0.16. The nitrogen gas content was 0.05. The reactor was run for three days without any operational trouble whatsoever.

The polyethylene had the following characteristics:

$MI_2$:            0.9
$MI_{21}$:           71
$MFR_{21/2}$:        80.7
$MFR_{21/5}$:        18.0
Density:        924.4 kg/m$^3$
Ash content:    407 ppm

| Particle size distribution: | Mesh | % |
|---|---|---|
| | $\geq$10 | 0.6 |
| | $\geq$20 | 30.5 |
| | $\geq$40 | 49.7 |
| | $\geq$60 | 14.7 |
| | $\geq$120 | 4.2 |
| | $\geq$200 | 0.3 |
| | <200 | 0.0 |
| Average particle size: | 0.83 | mm |
| Bulk density: | 428 | kg/m$^3$ |
| Vanadium content of the polyethylene: | 4 | ppm |
| Chlorine content: | 124 | ppm |
| Silicon content: | 179 | ppm |
| Aluminium content: | 176 | ppm |

EXAMPLE 21

This Example illustrates the production of polyethylene with high density (HD) using the catalyst composition according to the invention. As will appear from the Example, the catalyst composition according to the invention does not give any fines. Furthermore, the material obtained is less yellow than the one obtained with the catalyst of the comparison Example 23.

A chlorinated oxygen-containing vanadium compound was prepared by causing 15.3 g of $V_2O_5$ to react with 71 ml of benzotrichloride. The reaction was carried out under reflux boiling at 70°C for 3.5 hours, all $V_2O_5$ being dissolved.

The solution with the resulting chlorinated oxygen-containing vanadium compound was then added to a slurry, prepared in accordance with Example 1, of 614 g TEA-treated silica (Davison grade 955, 600°C) in 2.7 l of pentane and allowed to react for 30 min. in an inert nitrogen atmosphere.

In the same manner as in Example 1, the catalyst was then dried under nitrogen gas at 45°C, whereupon 204 g of pentachloroethane and 60 g of chloroform were carefully added in an inert nitrogen atmosphere to the dried catalyst.

The polymerisation was carried out in the gas phase in a pilot reactor using the catalyst. The production was about 10 kg of polyethylene/hour. The reactor temperature was 91°C and the total pressure in the reactor

13

18 bars. The molar ratios during polymerisation were: hydrogen/ethylene = 0.055, and butene/ethylene = 0.023. Nitrogen gas content (volume part) 0.13.

The characteristics of polyethylene prepared were as follows:

$MI_{21}$:           10.5
$MFR_{21/5}$:           23
Density:           950 kg/m$^3$
Ash content:           750 ppm

| Particle size distribution: | Mesh | % |
|---|---|---|
| | $\geq 10$ | 0.1 |
| | $\geq 20$ | 13.1 |
| | $\geq 40$ | 56.3 |
| | $\geq 60$ | 11.6 |
| | $\geq 120$ | 18.1 |
| | $\geq 200$ | 0.7 |
| | $< 200$ | 0.1 |
| Average particle size: | 0.62 mm | |
| Bulk density: | 418 kg/m$^3$ | |

Yellow index according to Elrepho 2.9 Colour B-(the yellow index is determined by measurement in an Elrepho-reflection photometer of the reflection across an opaque glass standard with suitable test plates at two different filters R53 and R42 corresponding to the wavelengths 540 and 426 nm, respectively. The yellow index is defined as the difference in per cent of reflection at filters R53 and R42).

## EXAMPLE 22 (COMPARISON)

This Example illustrates the production of linear low-pressure polyethylene (LLD). As will appear from the Example, this vanadium-based catalyst according to European patent specification 0,120,501 gives a polyethylene of lower MFR, i.e. a less wide molecular weight distribution, at high MI than the catalyst composition according to the invention (see Example 20).

742 g of silica activated at 600°C (Davison 953) was slurried in 3.3 l of tetrahydrofuran (THF). 46.7 g of pulverulent $VCl_3$ was added to the suspension. The desired vanadium content was 0.4 mmol. The mixture was left under agitation for 16 hours at 75°C and then dried for 16 hours. The silica was suspended in 2500 ml of pentane. 992 ml of 11.8% diethyl aluminium chloride (DEAC) was added and allowed to react at 40-45°C for 1 hour. The molar ratio between DEAC and vanadium was 2:1. The catalyst production took place in nitrogen gas atmosphere.

The resulting catalyst composition was utilised for polymerisation of ethylene in the gas phase. The production was 8.5 kg/h, and the reactor temperature was 88°C. The total pressure in the reactor was 18 bars and the molar ratio between hydrogen and ethylene was 0.013, and between butene and ethylene 0.105. The nitrogen gas content was 0.10. Chloroform was supplied to the reactor so that a molar ratio of 20:1 was maintained between chloroform and vanadium.

The polyethylene obtained had the following characteristics:

$MI_2$:           0.74
$MI_{21}$:           41.9
$MFR_{21/2}$:           56.3
$MFR_{21/5}$:           14.5
Density:           922 kg/m$^3$
Ash content:           550 ppm

| Particle size distribution: | Mesh | % |
|---|---|---|
| | $\geq 10$ | 18.4 |
| | $\geq 20$ | |
| | $\geq 40$ | 71.5 |
| | $\geq 60$ | 4.0 |
| | $\geq 120$ | 5.5 |
| | $\geq 200$ | 0.05 |
| | $<200$ | 0.5 |
| Average particle size: | 1.04 mm | |
| Bulk density: | 373 $kg/m^3$ | |

EXAMPLE 23 (COMPARISON)

Example of high-pressure polyethylene (HD). This vanadium-based catalyst according to European patent specification 0,120,501 gives more fines and inferior colour in polyethylene than the catalyst according to the present invention.

610 g of silica (silica Davison 952, 790°C) was slurried in 2750 ml of tetrahydrofuran (THF). 14.8 g of pulverulent $VCl_3$ was added to the suspension. The desired vanadium content was 0.15 mmol of vanadium/g of catalyst. The mixture was left under agitation for 5 hours and then dried for 16 hours. The silica was suspended in 1800 ml of pentane. 191 ml of 20% diisobutyl aluminium chloride (DIBAC) was added (molar ratio DIBAC:V = 1.5:1) and allowed to react for 1 hour. The entire production occurred in a nitrogen gas atmosphere.

The resulting catalyst composition was then utilised for polymerisation of ethylene for 48 hours in the gas phase. The production was about 10 kg/h. The reactor temperature was 90°C, and the total pressure in the reactor was 17.7 bars. The molar ratios during polymerisation were: hydrogen/ethylene = 0.104 and hexene/ethylene = 0.0126. The nitrogen gas content was 0.114. Chloroform was supplied to the reactor so that a molar ratio of 20:1 was maintained between chloroform and vanadium.

The characteristics of the polyethylene obtained were as follows:

$MI_{21}$: 6.1
$MFR_{21/5}$: 20
Density: 950 $kg/m^3$
Ash content: 610 ppm

| Particle size distribution: | Mesh | % |
|---|---|---|
| | $\geq 10$ | 1.1 |
| | $\geq 20$ | 11.0 |
| | $\geq 40$ | 29.5 |
| | $\geq 60$ | 21.0 |
| | $\geq 120$ | 32.7 |
| | $\geq 200$ | 3.0 |
| | $<200$ | 1.7 |
| Average particle size: | 0.49 mm | |
| Bulk density: | 453 $kg/m^3$ | |

Colour according to Elrepho 6.2 Colour C.

The polyethylene was compounded in a Brabender mill. The stresscracking tendency of the material was tested according to Bell ASTM 1693-70. All 10 test specimens showed cracks after 168 hours. $F_{20}$ = 84 h, $F_{50}$ = 142 h and $F_{80}$ = 239 h. Test value $F_x$ is defined as the time for rupture on X% of the test specimens.

15

## Claims

1. A catalyst composition which is the reaction product between
a) the product obtained by reacting a support which consists of activated silica, in a liquid alkane with an organometallic compound having the formula
$$MR_1R_2R_3$$
wherein M is a metal in group III of the Periodic Table, $R_1$ is Cl, Br, I or an alkyl group having 1-12 carbon atoms, $R_2$ and $R_3$ independently of each other are selected among H, Cl, Br, I, alkyl groups having 1-12 carbon atoms, and alkoxy groups having 1-12 carbon atoms; and
b) a chlorinated oxygen-containing vanadium compound, **characterised** in that the chlorinated oxygen-containing vanadium compound is the reaction product between vanadium pentoxide and a chlorinating agent selected among
i) $AlCl_3$, $TiCl_4$, $ZrCl_4$, $SbCl_5$, $SbOCl_3$, $SnCl_4$, $PCl_5$ and $POCl_3$;
ii) $COCl_2$, $(COCl)_2$, $SOCl_2$, $SO_2Cl_2$, $C_6H_5COCl$, $C_nH_{2n+1}COCl$ wherein n = 1-12; and
iii) hexachloropropylene and benzotrichloride.

2. A catalyst composition as claimed in claim 1, **characterised** in that the organometallic compound is trialkyl aluminium.

3. A catalyst composition as claimed in claim 1, **characterised** in that it is the reaction product between
a) the product obtained by reacting activated silica in pentane with triethyl aluminium, and
b) a chlorinated oxygen-containing vanadium compound which is the reaction product between vanadium pentoxide and benzotrichloride in pentachloroethane.

4. A process for producing an olefin polymer, **characterised** in that the olefin monomer, in the presence of hydrogen and, optionally, one or more comonomers, is contacted under polymerisation conditions with a catalyst composition according to claim 1.

5. A process as claimed in claim 4, **characterised** in that the monomer consists essentially of ethylene, and that the polymerisation is carried out in the gas phase.


## Patentansprüche

1. Katalysatorzusammensetzung, die das Reaktionserzeugnis ist zwischen
a) dem Produkt, das durch die Reaktion eines aus aktivierter Silika bestehenden Trägers in einem flüssigen Alkan mit einem Organometall der Formel
$$MR_1R_2R_3$$
erhalten ist, worin M ein Metall der Gruppe III des periodischen Systems, $R_1$ Cl, Br, I oder eine Alkylgruppe mit 1-12 Kohlenstoffatomen ist, $R_2$ and $R_3$ unabhängig voneinander unter H, Cl, Br, I, Alkylgruppen mit 1-12 Kohlenstoffatomen und Alkoxygruppen mit 1-12 Kohlenstoffatomen gewählt sind; und
b) einer chlorierten, Sauerstoff enthaltenden Vanadiumverbindung, dadurch **gekennzeichnet**, dass die chlorierte, Sauerstoff enthaltende Vanadiumverbindung das Reaktionserzeugnis zwischen Vanadiumpentoxid und einem Chloriermittel ist, das unter
i) $AlCl_3$, $TiCl_4$, $ZrCl_4$, $SbCl_5$, $SbOCl_3$, $SnCl_4$, $PCl_5$ und $POCl_3$;
ii) $CoCl_2$, $(CoCl)_2$, $SOCl_2$, $SO_2Cl_2$, $C_6H_5COCl$, $C_nH_{2n+1}COCl$, worin n = 1-12 ist; und
iii) Hexachloropropylen und Benzotrichlorid gewählt ist.

2. Katalysatorzusammensetzung nach Anspruch 1, dadurch **gekennzeichnet**, dass das Organometall Trialkylaluminium ist.

3. Katalysatorzusammensetzung nach Anspruch 1, dadurch **gekennzeichnet**, dass sie das Reaktionserzeugnis ist zwischen
a) dem durch die Reaktion von aktivierter Silika in Pentan mit Triäthylaluminium erhaltenen Produkt; und
b) einer chlorierten, Sauerstoff enthaltenden Vanadiumverbindung, die das Reaktionserzeugnis zwischen Vanadiumpentoxid und Benzotrichlorid in Pentachloroäthan ist.

4. Verfahren zur Erzeugung eines Olefinpolymers, dadurch **gekennzeichnet**, dass das Olefinmonomer In der Anwesenheit von Wasserstoff und eventuell einem oder mehreren Comonomeren unter Polymerisationsbedingungen mit einer Katalysatorzusammensetzung nach Anspruch 1 in Kontakt gebracht wird.

5. Verfahren nach Anspruch 4, dadurch **gekennzeichnet**, dass das Monomer im wesentlichen Äthylen ist, und dass die Polymerisation in der Gasphase durchgeführt wird.

## Revendications

1. Composition de catalyseur qui est le produit de la réaction entre

a) le produit obtenu par réaction d'un support, constitué de silice activée, dans un alcane liquide, avec un composé organométallique de formule

$$MR_1R_2R_3$$

dans laquelle M est un métal du groupe III de la classification périodique, $R_1$ est Cl, Br, I ou un groupe alkyle ayant 1 à 12 atomes de carbone, $R_2$ et $R_3$ indépendamment sont choisis chacun parmi H, Cl, Br, I, les groupes alkyles ayant 1 à 12 atomes de carbone et les groupes alcoxy ayant 1 à 12 atomes de carbone ; et

b) un composé de vanadium contenant de l'oxygène chloré, caractérisée en ce que le composé de vanadium contenant de l'oxygène chloré est le produit de la réaction entre le pentoxyde de vanadium et un agent de chloration choisi parmi

i) $AlCl_3$, $TiCl_4$, $ZrCl_4$, $SbCl_5$, $SbOCl_3$, $SnCl_4$, $PCl_5$ et $POCl_3$ ;

ii) $COCl_2$, $(COCl)_2$, $SOCl_2$, $SO_2CL_2$, $C_6H_5COCl$, $C_nH_{2n+1}COCl$ où n = 1 à 12 ; et

iii) l'hexachloropropylène et le trichlorure de benzényle.

2. Composition de catalyseur selon la revendication 1, caractérisée en ce que le composé organométallique est un trialkylaluminium.

3. Composition de catalyseur selon la revendication 1, caractérisée en ce qu'elle est le produit de la réaction entre

a) le produit obtenu par réaction de la silice activée dans le pentane avec du triéthylaluminium, et

b) un composé de vanadium contenant de l'oxygène chloré qui est le produit de la réaction du pentoxyde de vanadium et du trichlorure de benzényle dans le pentachloroéthane.

4. Procédé pour préparer un polymère d'oléfine, caractérisé en ce que l'on met le monomère oléfine, en présence d'hydrogène et facultativement d'un ou plusieurs comonomères, en contact dans des conditions de polymérisation, avec une composition de catalyseur selon la revendication 1.

5. Procédé selon la revendication 4, caractérisé en ce que le monomère est constitué essentiellement d'éthylène et en ce que la polymérisation est effectuée en phase gazeuse.